Europäisches Patentamt

European Patent Office

Office européen des brevets

(11) Publication number: **0 316 957**
**A2**

# EUROPEAN PATENT APPLICATION

(21) Application number: **88119250.4**

(22) Date of filing: **18.11.88**

(51) Int. Cl.⁴: **G06F 15/20**

(30) Priority: **19.11.87 JP 292470/87**

(43) Date of publication of application:
**24.05.89 Bulletin 89/21**

(84) Designated Contracting States:
**DE FR GB IT NL**

(71) Applicant: **SHARP KABUSHIKI KAISHA**
**22-22 Nagaike-cho Abeno-ku**
**Osaka 545(JP)**

(72) Inventor: **Kubo, Noboru**
**1555-7, Koizumi-cho**
**Yamtokoriyama-shi Nara-ken(JP)**
Inventor: **Yoshida, Shigeru**
**1-31-101, Higashikidera-cho**
**Nara-shi Nara-ken(JP)**
Inventor: **Ueda, Masaya**
**11-13, Koshien**
**Nishinomiya-shi Hyogo-ken(JP)**
Inventor: **Kayamori, Takashi**
**1-9-11-206, Nagai Sumiyoshi-ku**
**Osaka-shi Osaka-fu(JP)**
Inventor: **Ono, Shuichiro**
**Takanohara Aban A-509 2, Kabutodai,**
**2-chome**
**Kizu-cho Soraku-gun Kyoto-fu(JP)**
Inventor: **Miyoshi, Tsutomu**
**2613-1, Ichinomoto-cho**
**Tenri-shi Nara-ken(JP)**
Inventor: **Yamauchi, Yumi**
**Tomio Danchi 38-410 4-3-1, Torimi-cho**
**Nara-shi Nara-ken(JP)**
Inventor: **Mameda, Kenji**
**2-1, Unebi-cho**
**Kashihara-shi Nara-ken(JP)**
Inventor: **Tomioka, Masato**
**2613-1, Ichinomoto-cho**
**Tenri-shi Nara-ken(JP)**
Inventor: **Nishimoto, Fujiko**
**1-36-402, Higashikidera-cho**
**Nara-shi Nara-ken(JP)**

(74) Representative: **Patentanwälte TER MEER -**
**MÜLLER - STEINMEISTER**
**Mauerkircherstrasse 45**
**D-8000 München 80(DE)**

(54) **Type setting system of a flexible text.**

(57) The disclosure relates to a type setting system of a flexible text, or a hypertext for integratedly

EP 0 316 957 A2

supporting the preparation of a document, controlling and retrieving the document, controlling and retrieving multimedia data, type setting data, and printing the document. The type setting system of the hypertext system comprises the steps of storing a network-shaped flexible text (1) formed by interrelating nodes which are logical units by links (2); applying type setting operation, necessary in converting the flexible text into a flat text, to the network of the flexible text; and converting the stored flexible text into the flat text based on the type setting operation necessary in converting the flexible text into the flat text.

*Fig. 1*

2

## TYPE SETTING SYSTEM OF A FLEXIBLE TEXT

## BACKGROUND OF THE INVENTION

(Field of the Invention)

The present invention relates to the processing of a computerized document and the type setting system thereof, and more particularly, to a type setting system of a flexible text (so-called hypertext) for integratedly supporting the preparation of a document, controlling and retrieving the document, controlling and retrieving multimedia data, type setting data, and printing the document.

(Description of Related Art)

Free from the form of a document printed on paper, namely, a flat document, a hypertext is a document composed by making the most of the feature of a computer. That is, the hypertext is a document composed by replacing paper which is a conventional medium for information with a new medium, namely, a computer.

A hypertext is described in a computer magazine Vol. 20, No. 9, 1987 which carries "Hypertext: An Introduction and Survey". In this hypertext system, a document is divided according to their logical units (nodes) connected to each other by links so that the respective units are interrelated. The interrelated respective nodes are stored by a memory of the computer. A text, namely, a hypertext composed according to the hypertext system has a complicated non-linear structure such as a tree structure, a net structure, or the combination of these two structures. A user can read out necessary logical units stored by the memory of the computer based on the links. Thus, the hypertext system can integratedly support the preparation of a document, control and retrieve the document, control and retrieve multimedia data. Further, it has a data base function.

As described above, the hypertext having a non-linear complicated structure such as a tree structure, a net structure, or the combination of these two structures is quite different from a document printed on paper by conventional methods, namely, a flat document having a linear structure. Accordingly, a known hypertext system such as the above-described one has no function of printing the entire document and efforts to allow the known hypertext system to effectively and appropriately convert a hypertext into a flat document have not been made. Accordingly, a document prepared by the known hypertext system functions as a document only on the display device, namely, the computer screen and further, the document is dependent on a specific system and as such has no universality.

In addition, since the units of the hypertext are printed individually by a hard copy function, the units are not logically related to each other, or a flat document thus formed is merely a mixture of information having no logical relationship with each other.

## SUMMARY OF THE INVENTION

The present invention has been made with a view to substantially solving the above-described disadvantage and has for its object to provide an improved type setting system of a hypertext system provided with a type setting function of appropriately converting a document having a non-linear complicated structure into a flat document having a linear structure without degrading the function of the hypertext system.

The type setting system of a flexible text according to the present invention for accomplishing the above-described object comprises the steps of: storing a network-shaped flexible text formed by interrelating nodes which are logical units by links; applying type setting operation, necessary in converting the flexible text into a flat text, to the network of the flexible text; and converting the stored flexible text into the flat text based on the type setting operation necessary in converting the flexible text into the flat text.

## BRIEF DESCRIPTION OF THE DRAWINGS

The object and feature of the present invention will become apparent from the following description taken in conjunction with preferred embodiment thereof with reference to the accompanying drawings, and in which:

Fig. 1 is a conceptual view showing one embodiment of the type setting system of a flexible text in accordance with the present invention;

Fig. 2 is a block diagram of a hypertext system in accordance with the present invention;

Fig. 3 is a block diagram of a document;

Fig. 4 is a view of showing the content of a card of "table of contents";

Fig. 5 is a view of showing the content of a card of "feature of system";

Fig. 6 is a view of showing the content of a card of "block diagram";

Fig. 7 is a view showing the display which appear on a computer screen when a type setting unit starts its operation;

Fig. 8 is a view in which the block diagram of the document shown in Fig. 3 and a view showing a frame are simultaneously displayed;

Fig. 9 is a flowchart showing a processing for preparing a document;

Fig. 10 is a flowchart showing a processing for reading a document;

Fig. 11 is a flowchart showing a type setting? processing; and

Fig. 12 is a view showing an example of printed flat documents.

## DETAILED DESCRIPTION OF THE INVENTION

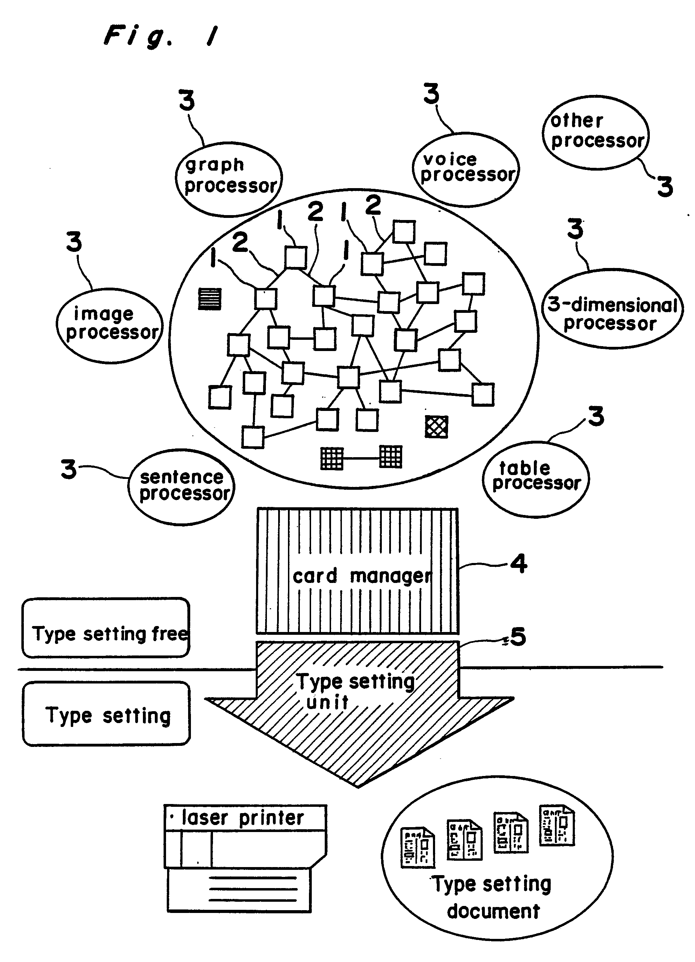

Fig. 1 is a conceptual view of the hypertext system of the type setting system of a hypertext in accordance with the present invention. In this hypertext system, sentence data is controlled by cards which are logical unit of a document. The respective cards are connected to each other by links provided by the hypertext system. These cards correspond to the node of the above-described conventional hypertext system. Many small quadrangles 1, in an ellipse, denoting cards are connected to each other by links 2.

Cards 1 are classified into various types according to kind of data such as sentence card, image card, graphic card, voice card and the like. Card processors 3 corresponding to the respective types are provided. The data of the respective cards 1 are prepared and edited by the card processors 3. A card type-data base manager 4 (hereinafter referred to as card manager) controls these cards 1 and retrieves data. The above-described structure of the hypertext system in accordance with the present invention is similar to the conventional one.

The card processors 3 transfers the type setting data, for example, word wrap, heading, running head, and page number to the card manager 4. Upon receipt of such data, the card manager 4 issues an instruction to the type setting unit 5 to process the data. The type setting unit 5 also arranges images and graphic forms according to the instruction of the card manager 4. Further, a user can select layouts such as the size of paper, the number of columns, the arrangement of the contents of a document, e.g., position in which a graphic form is arranged, the style and size of the character. The type setting unit 5 processes the data of the type setting described above.

In the hypertext system according to the present invention, the logical relationship represented by the links 2 which connect the cards 1 is changed by the type setting unit 5 into the position relationship of a type setting. Thus, a hypertext is converted into a flat document. It depends on the type setting performance of the type setting unit 5 whether or not the hypertext can be favorably converted into a flat document. In other words, the type setting unit 5 acts as the medium for converting "document free from type setting" to "laid-out document".

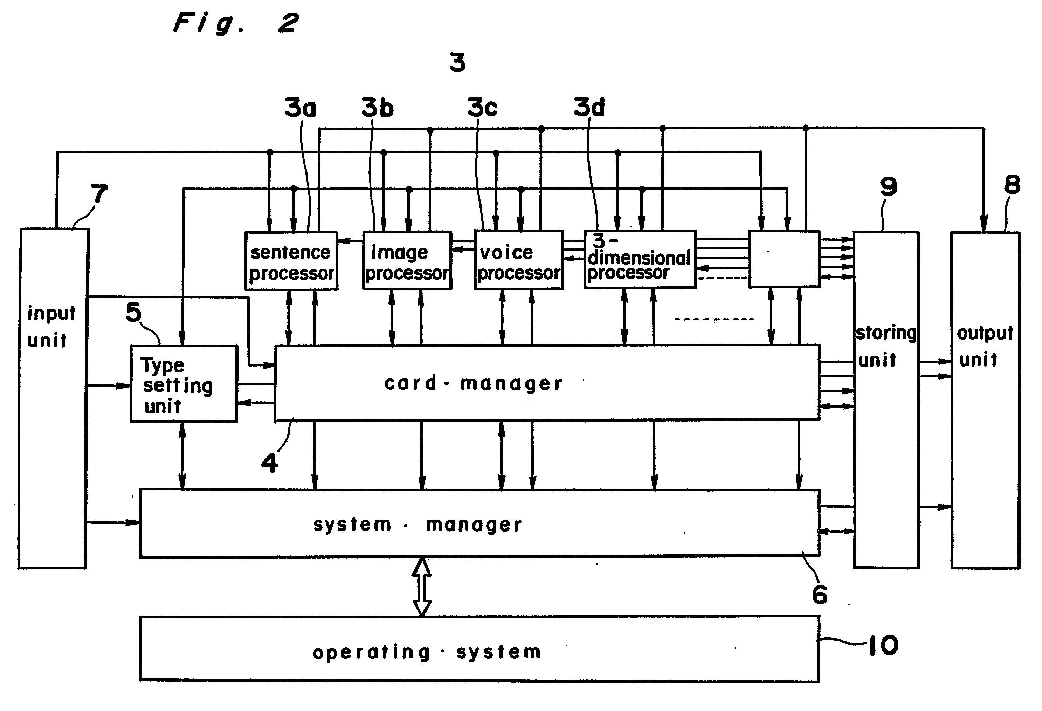

Fig. 2 is a block diagram of the hypertext system for embodying the present invention. The card processors 3, the card manager 4, and the type setting unit 5 have functions of their own for processing data. Specifically, under the control of the system manager 6, a document processor 3a prepares and edits sentences, an image processor 3b prepares and edits an image. A voice processor 3c edits a voice. The card manager 4 links and controls the respective cards 1 through the card processors 3. The type setting unit 5 decides the fundamental type setting as described later.

In the hypertext system according to the present invention, the logical relationship represented by the links 2 which connect the cards 1 is changed by the type setting unit 5 into the position relationship of a type setting. Thus, a hypertext is converted into a flat document. In order to make this conversion, data is exchanged among the card processors 3a, 3b, 3c, and 3d, the card manager 4, and the type setting unit 5 without the intervention of the system manager 6. Specifically, according to the fundamental type setting decided by the type setting unit 5 under the control of the system manager 6, the data of the document processor 3a is transferred to the type setting unit 5 by the instruction of the card manager 4, which is described in detail later. Thus, a flat document is prepared. An input unit 7, an output unit 8, and a storing unit 9 are directly connected to the card processors 3a, 3b, 3c, and 3d, the card manager 4, the type setting unit 5, and the system manager 6, respectively so that data is promptly processed by exchanging data among the card processors 3a, 3b, 3c, and 3d, the card manager 4, the type setting unit 5, and the system manager 6. An operating system 10 controls the entire hypertext system in accordance with the present invention.

The detailed description of the operation of the hypertext system is made hereinbelow.

(1) Document Preparation

The following operations are required in addition to an input operation in order to prepare a document using a word processor: To take notes of what occurred to one's mind; to make reference to data related to the content of the document to be prepared; to make quotations; to make annotations; to compose an entire structure with reference to the notes taken by the user, the quotations, and the annotations; to make items detailed; to change combinations; to change the order of items or paragraphs; to delete unnecessary items, paragraphs or sentences; to change the structure of the document, etc. These operations are all the more important in preparing a non-standardized document.

A word processor supports a user in preparing a document in the final stage of the document preparation while the hypertext in accordance with the present invention is capable of aiding the user in preparing a document from the initial stage in which it is necessary for the user to make reference to data relevant to the content of the document, quotations and annotations. These operations can be achieved by opening cards 1, connected by the links 2, in which the reference sentences, quotations, and annotations are written. In addition to the above-described method for preparing a document, a hypertext can be prepared by "bottom-up" and "top-down" methods using window system and cut and paste functions.

The following is the descriptions of the "bottom-up" and "top-down" methods. According to the "bottom-up" method, first, what has occurred to a user's mind is itemized by a plurality of the cards 1, then, each of the items are sub-itemized. The entire structure can be varied by appropriately arranging the cards 1 and selecting the links 2 which connect desired cards 1 so that the document is built up. This method is a so-called trial and error method. On the other hand, the "top-down" method is systematic. That is, first, every item is written in one card 1 in consideration of the entire structure, then each of the items is sub-itemized in separate cards 1. Thereafter, every item written in the card 1 is connected by the links 2 to every separate card 1 in which each of the items has been sub-divided. A hypertext is formed by appropriately combining both methods.

Since a flat document is necessarily paginated, it is troublesome for a user to vary the structure of the document when the document is prepared by a conventional word processor. Further, since character information is inputted sequentially in the word processor, it is difficult to prepare a document by the "bottom-up" and "top-down" methods as described above. On the other hand, there is no concept of "page" and the user is free from making a type setting in a hypertext. Accordingly, it is easy to rearrange sentences and modify the structure of the document. In particular, the hypertext system can handle information such as a voice and a moving picture which cannot be printed on paper. For example, opening a voice card allows the user to hear a voice.

The hypertext system is capable of handling not only sentences, but also a photograph, a chart, and a voice and further saving them in such a condition that they are related to each other. As such, the hypertext system has a function of providing data base. Furthermore, the function of the multimedia data base of the hypertext system is a great help for controlling and preparing a document. The systematic control of stored data increases the efficiency for preparing a new document.

(2) Reading of Document

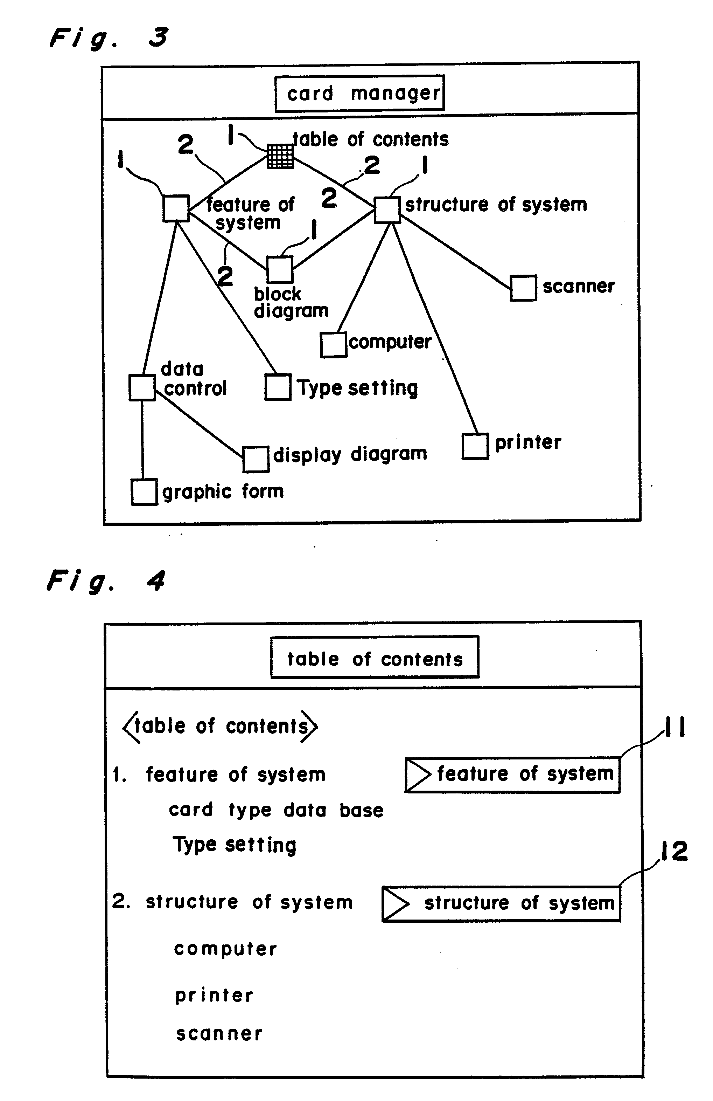

In reading a document in the hypertext system, when the document is opened, a block diagram showing the structure of the document is displayed as shown in Fig. 3. Many small quadrangles shown in Fig. 3 designating the cards 1 having names, respectively are connected to each other by the links 2 drawn in the form of lines, i.e., various relationships are formed between the cards 1. For example, the card 1 of "table of contents" is linked to the card 1 of "feature of system" and to the card 1 of "structure of system". Each of the cards 1 has a sentence, photograph, and graphic form. The content of each of the cards 1 can be displayed on the screen by opening the respective cards 1.

When the card 1 of "table of contents" is opened by specifying it in Fig. 3 such as by a mouse, the content of the card 1 is displayed as shown in Fig. 4. The content of this card 1 indicates that the document has items of "feature of system" and "structure of system". Each of the portions enclosed by rectangular frames in Fig. 4 indicates "reference pointer" 11 and 12 which function as a page of a flat document formed by printing it on paper. That is, the reference pointers 11 and 12 link the cards of "feature of system" and "structure of system" to other cards 1. In practical use, the content shown in Fig. 3 and the content shown in Fig. 4 are displayed in the windows on the screen simultaneously by the window system. Therefore, it is possible to understand that the links 2 connect the card 1 of "table of contents" to the card 1 of "feature of system" and to the card 1 of "structure of system".

The window system is capable of moving the windows and changing their sizes, and further, opening a plurality of windows simultaneously, stacking one on the other, and stacking them with the upper window lowermost.

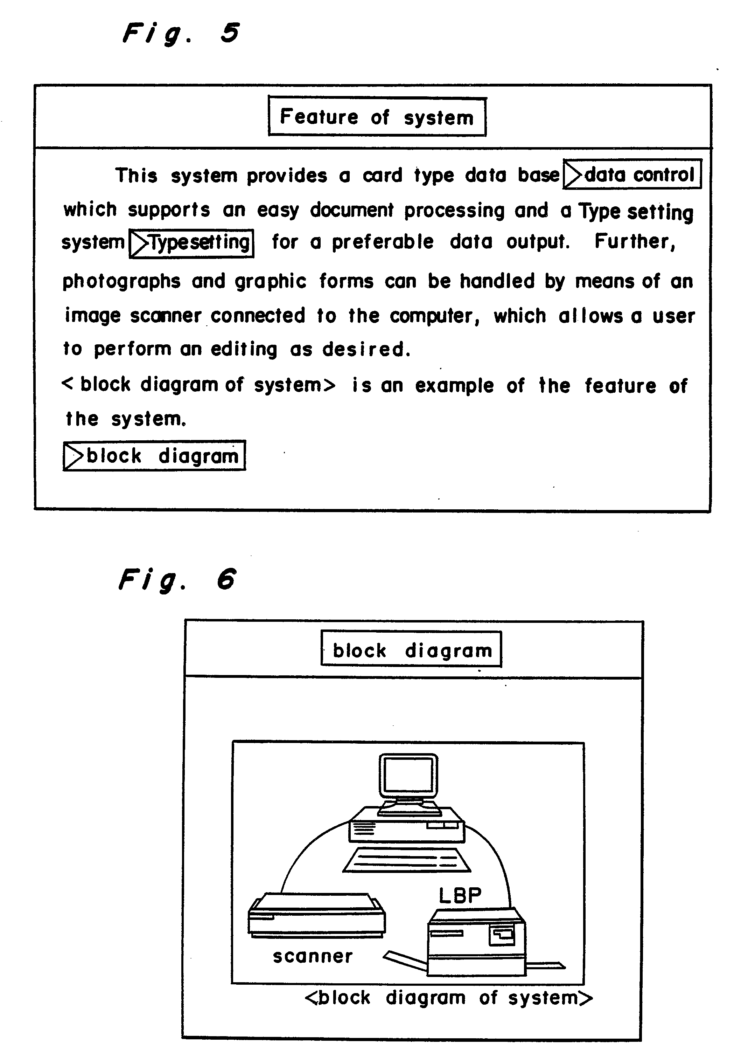

The card 1 of "feature of system" can be opened by specifying it from the block diagram shown in Fig. 3 and also by specifying the reference pointer 11, from the window showing the "table of contents" in Fig. 4, which designates the card 1 of "feature of system". As a result, the content as shown in Fig. 5 is displayed. Three cards can be referenced from the card of "feature of system". For example, when the card 1 of "block diagram" is opened by specifying it, a graphic form as shown in Fig. 6 is displayed. Thus, in the hypertext system, the operation of "opening a card" is performed instead of the operation of "turning pages" in a flat document formed in a conventional manner. A plurality of cards 1 can be opened simultaneously by the window system and characters and graphic form can be cut and pasted on each other (cut and paste function).

(3) Publishing of Document

As described above, there is no concept of "page" and "type setting" in the hypertext system because a computer is used as a medium to prepare a document. Accordingly, the hypertext is inconsistent with the medium of paper. Therefore, unless some means are provided, it is very difficult to print the hypertext on paper. It is to be noted that a flat document printed on paper can be read at any time and place and no particular device is used to keep it as it is for a long time. Therefore, an appropriate use of either paper or computer depending situation is important.

However, no known hypertext systems have publishing function. In most of them, a printer copies information displayed on the screen of the computer thereof. Accordingly, when the information is printed out, the hypertext loses its function, i.e., it becomes merely a collection of some pieces of information having no logical relationship with each other.

The hypertext system is capable of developing a new possibility of processing a document and displaying its performance when it is coexistent with paper.

The hypertext system in accordance with the present invention is provided with a type setting function from this point of view. That is, the logical relationship formed by the links which connect the cards is converted into the position relationship of a type setting by the type setting operation and the unit of "page" is introduced and as such the hypertext system having a non-linear complicated structure is converted into a flat document having a linear structure with the function of the hypertext maintained.

In order to convert the hypertext to the flat document easily and without degrading the function of the hypertext, the type setting function must have flexibility in making a type setting. Processings such as word wrap, column arrangement, and the like necessary for a printing are performed by the type setting function because the hypertext must be printed to convert it into a flat document.

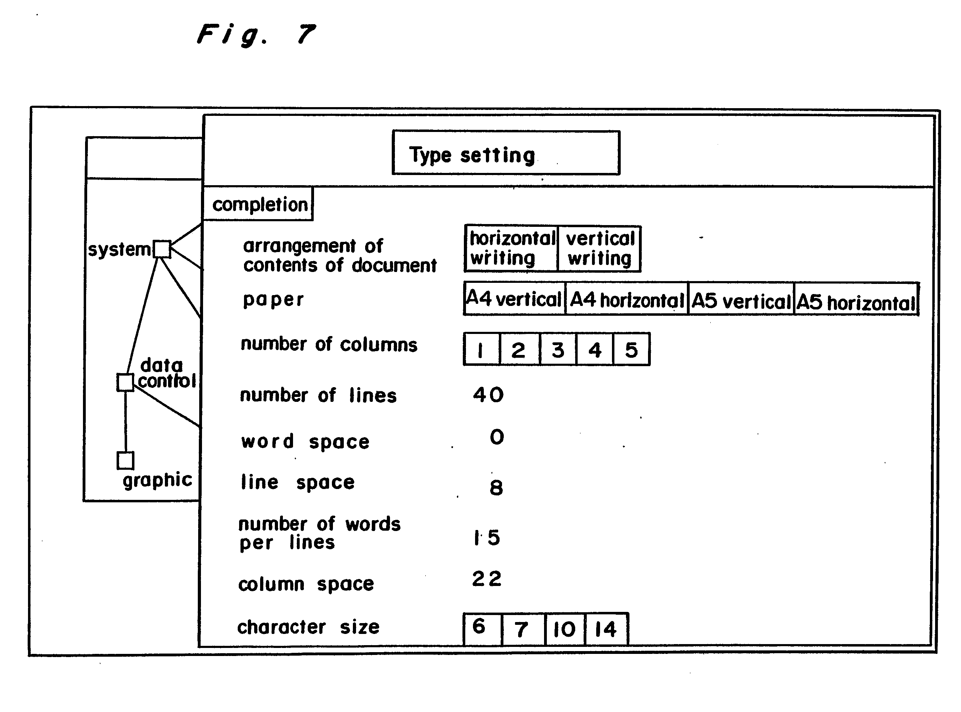

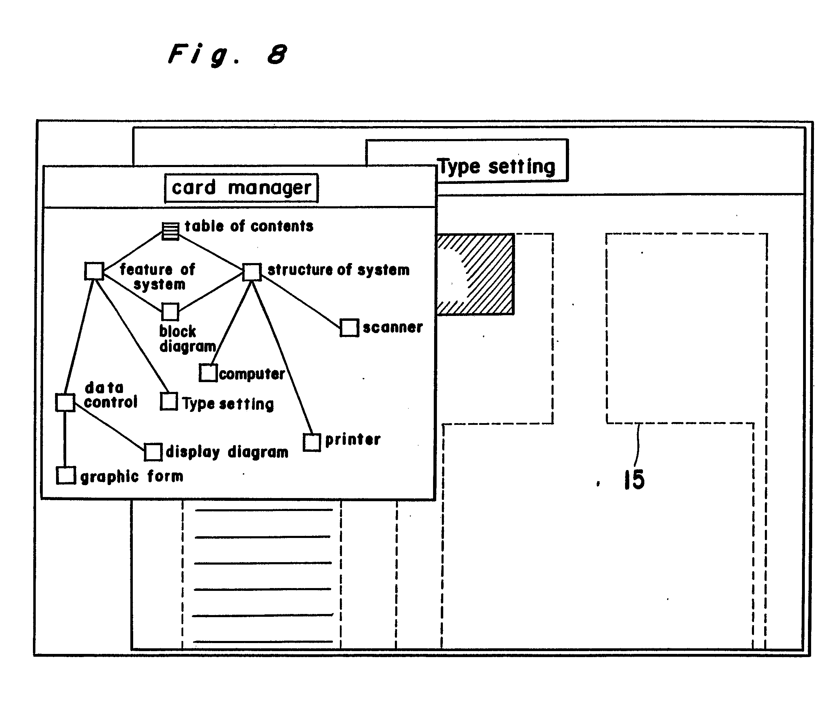

When the hypertext is printed by converting it into the flat document, the operation of the type setting unit 5 is started by the system manager 6. As a result, a window as shown in Fig. 7 is displayed on the screen. According to this display, the fundamental layouts such as arrangement of the contents of a document, the size of paper, and the number of columns are selected. Next, as shown in Fig. 8, the window system stacks the window 13 showing the document structure on the window 14 showing the type setting. Thereafter, necessary cards 1 are selected according to the window 13 showing the block diagram shown in Fig. 3.

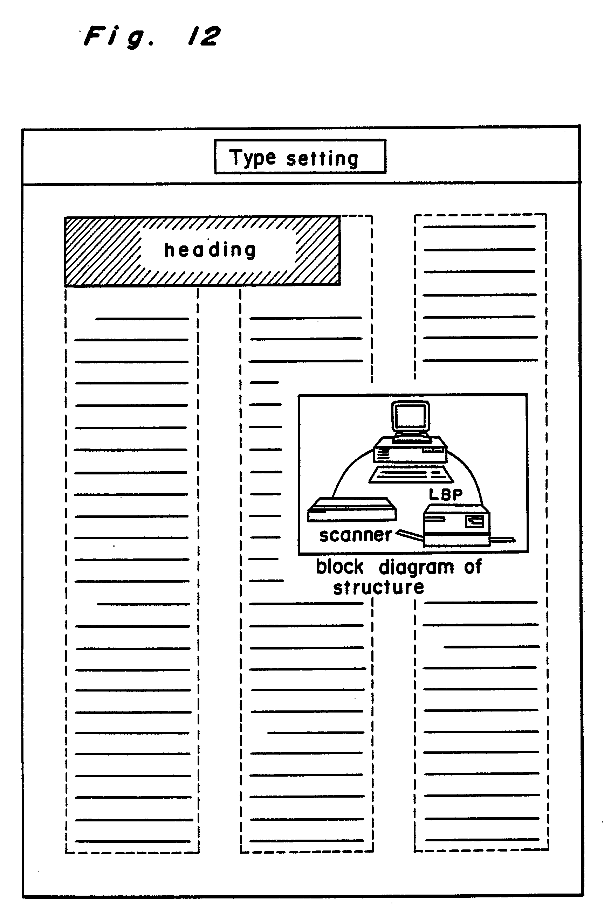

For example, when the card of a sentence is selected, the data of the selected card is inputted to the frames specified according to the window showing the type setting shown in Fig. 7. Referring to Fig. 8, if a picture, photograph or graphic form is inserted into a portion between sentences, a frame 15 of a desired size is set in the portion. Consequently, the data of the sentence is automatically inputted outside the frame 15. Thereafter, the data of the card of the picture, the photograph or the graphic form is inputted to the frame 15 as shown in Fig. 12.

As described above, the type setting unit 5, the card manager 4, the sentence processor 3a, the image processor 3b operate simultaneously and independently of each other. Specifically, the type setting unit 5 displays the image of the data inputted to the frames and processes data sequentially inputted thereto, thus displaying the data in the window (Fig. 8). The card manager 4 displays the block diagram shown in Fig. 3 in the window (Fig. 8). The sentence processor 3a displays the sentence data in the window. The image processor 3b displays the data of the graphic form in the window. The system manager 6 controls the insertions, deletions, stacks, sizes, and positions of these three windows. Thus, the hypertext system is capable of making a type setting as the user desires.

The type setting unit 5 is capable of handling many styles and sizes of characters and processings such as word wrap, heading, running head, and page number. The cut and paste processing can be performed between the type setting unit 5 and the card processors 3. Therefore, only a portion of data of the card 1 is transferred to the type setting unit 5 so that only necessary sentences and graphic forms of the card 1 can be displayed in the frames. Thus, a type setting as the user desires can be accomplished. Further, since an editing operation can be interactively made by the type setting unit 5, the document being prepared can be modified or changed in detail checking the entire document displayed on the screen. The formatted result is stored in the memory 9 for a re-utilization.

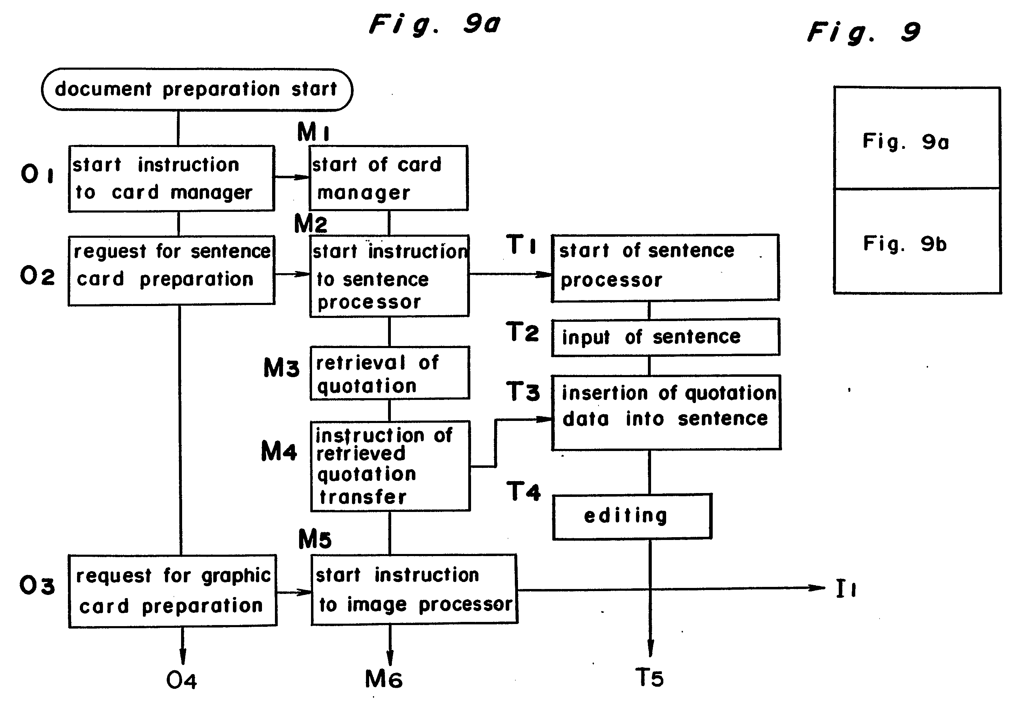

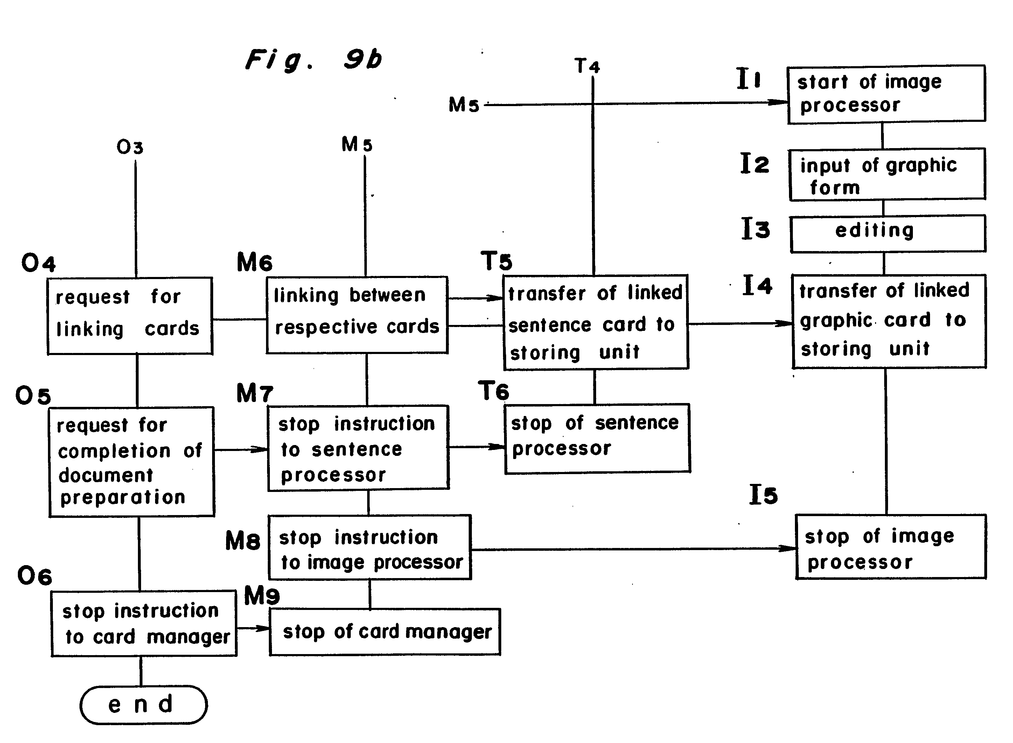

The detailed description of the above-described respective operations are made hereinbelow. Fig. 9 is an example of flowcharts showing the processing of preparing a document in which (O) denotes the step of the system manager 6; (M), the step of the card manager 4; (T), the step of the sentence processor 3a; and (I), the step of the image processor 3b. The operation for processing a document preparation is described hereinbelow.

At step $O_1$, the operation of the start of the card manager 4 is instructed, then at step $M_1$, the card manager 4 starts.

At step $O_2$, the card manager 4 is requested to prepare a document card, then at step $M_2$, the start of the sentence processor 3a is instructed by the card manager 4. At step $T_1$, the operation of the sentence processor 3a is started.

At step $T_2$, data to be written in the document card is inputted from the input unit 7.

At step $M_3$, a card necessary to be inserted into the sentence card by quoting the sentences stored by the storing unit 9 is retrieved by the card manager 4 from among the cards controlled by the card manager 4 through the sentence processor 3a. Then, the sentence card being prepared and the content of the retrieved card are simultaneously displayed on the screen, then, the quotation is selected.

At step $M_4$, the transfer of the quotation of the retrieved card is instructed. Then, at step $T_3$, the sentence processor 3a inserts the necessary data of the quotation of the card retrieved by the card manager 4 into the sentence card being prepared. That is, data is exchanged as necessary in a single card processor 3 or among the card processors 3 so that the cut and paste processing of data is accomplished.

At step $T_4$, the sentence thus prepared is edited.

At step $O_3$, the card manager 4 is requested to prepare a graphic card. Then, at step $M_5$, the card manager 4 issues an instruction to the image processor 3b to start its operation. At step $I_1$, the image processor 3b starts its operation.

At step $I_2$, the input unit 7 inputs graphic data to be written in a graphic card.

At step $I_3$, the prepared graphic form is edited.

At step $O_4$, the card manager 4 is requested to link the respective prepared cards. Then, at step $M_6$, the card manager 4 links related sentence cards to each other or the sentence card to the graphic card. Thus, the network of the hypertext is formed. At step $T_5$, the storing unit 9 stores the sentence card which have been linked and at step $I_4$, the storing unit 9 stores the graphic card which has been linked.

At step $O_5$, the card manager 4 is requested to complete the document preparation. Then, at steps $M_7$ and $M_8$, the card manager 4 issues instructions to the sentence processor 3a and the image processor 3b to stop their operations. At step $T_6$, the sentence processor 3a stops its operation and at step $I_5$, the image processor 3b stops its operation.

At step $O_6$, the system manager 6 issues an instruction to the card manager 4 to stop its operation. At step $M_9$, the card manager 4 stops its operation. Thus, the processing of the document preparation is completed.

The flowchart described above shows the simplest operation. When a document is prepared by the above-described "bottom-up" and "top-down" methods, a flowchart is more complicated.

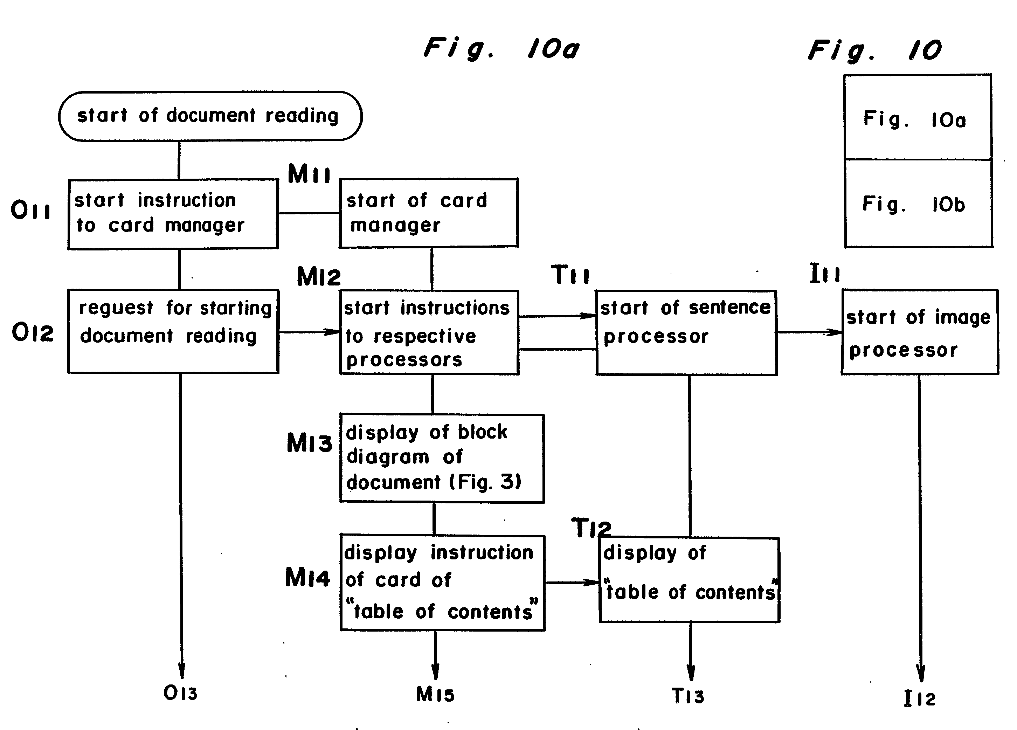

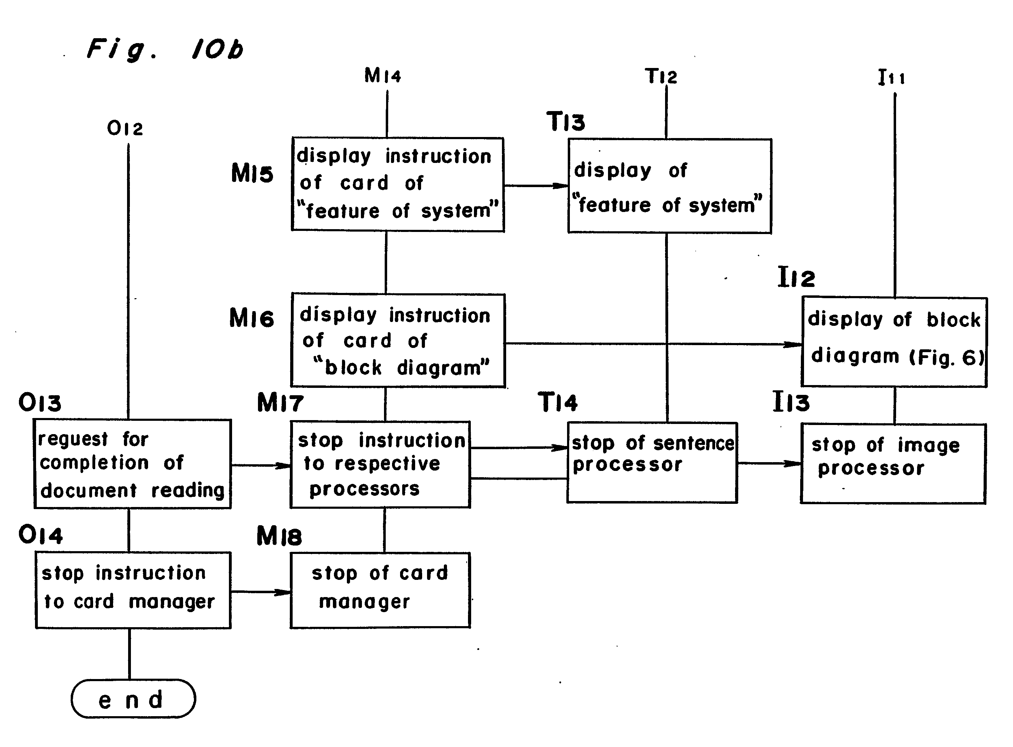

Fig. 10 is an example of flowcharts showing the operation for processing a document reading. The processing for the document reading by opening cards shown in Figs. 3, 4, 5, and 6 is described hereinbelow with reference to Figs. 10, 2, 3, 4, 5, and 6.

At step $O_{11}$, the system manager issues an instruction to the card manager 4 to start its operation. Then, at step $M_{11}$, the operation of the card manager 4 starts.

At step $O_{12}$, the card manager 4 is requested to start a document reading. Then, at step $M_{12}$, the card manager 4 issues instructions to the respective card processors 3 to start their operations. At step $T_1$, the sentence processor 3a starts its operation and at step $I_{11}$, the image processor 3a starts its operation.

At step $M_{13}$, the block diagram of the document shown in Fig. 3 is window-displayed in the output unit 8.

At step $M_{14}$, for example, the card of "table of contents" is specified by such as a mouse from the block diagram of the document shown in Fig. 3 and the display of the card 1 of "table of contents" is instructed. Then, at step $T_{12}$, the content of the card 1 of "table of contents" shown in Fig. 4 is window-displayed in the output unit 8 by the sentence processor 3a on the window showing the block diagram shown in Fig. 3.

At step $S_{15}$, the order of stacking the windows are reversed, i.e., the window showing the block diagram of the document shown in Fig. 3 stacks on the window showing "table of contents" in Fig. 4 and for example, "feature of system" is specified from among the block diagram of the document shown in Fig. 3 and the display of the card 1 of "feature of system" is instructed. Then, at step

$T_{13}$, the window showing the content of the card 1 of "feature of system" is displayed by the sentence processor 3a on the window showing the "table of contents" shown in Fig. 4 which stacks on the window showing the block diagram of the document shown in Fig. 3 (refer to Fig. 5). At this time, the window system is capable of changing the positions, sizes, order of stack, and partial deletion of the windows showing the block diagram of the document, "table of contents", and "feature of system" shown in Figs. 3, 4, and 5, respectively. Further, the cut and paste processing can be carried out among Figs. 3, 4, and 5.

In the above example, "feature of system" shown in Fig. 5 is window-displayed according to the block diagram of the document shown in Fig. 3, however, the window display of "feature of system" may also be specified by the reference pointer 11. In this case, the card 1 of "feature of system" is opened from the card 1 of "table of contents" not through the pointer 11.

At step $M_{16}$, in the above-described manner, the display of the card 1 of "block diagram" is re-specified according to the block diagram of the document shown in Fig. 3. Then, at step $I_{12}$, the image processor 3b displays the block diagram as shown in Fig. 6.

At step $O_{13}$, the card manager 4 is requested to complete the document reading. Then, at step $M_{17}$, the card manager 4 issues instructions to the respective card processors 3 to stop their operations. At step $T_{14}$, the sentence processor 3a stops its operation and at step $I_{13}$, the image processor 3b stops its operation.

At step $O_{14}$, the card manager 4 is instructed to stop its operation. Then, at step $M_{18}$, the operation of the card manager 4 is stopped. Thus, the processing of the document reading is stopped.

The flowchart shown in Fig. 10 shows only the processing of the document reading to be performed by the sentence processor 3a and the image processor 3b, however, a voice can be outputted by the voice processor 3c at a desired position of the document being prepared and a moving picture can also be displayed by the three-dimensional graphic processor 3d.

The flowchart shown in Fig. 10 shows a simple processing of a document reading. Practically, more card processors 3 are used to make a simultaneous window display and effect more cut and paste processings and voice outputs. The flowchart showing such a case is more complicated.

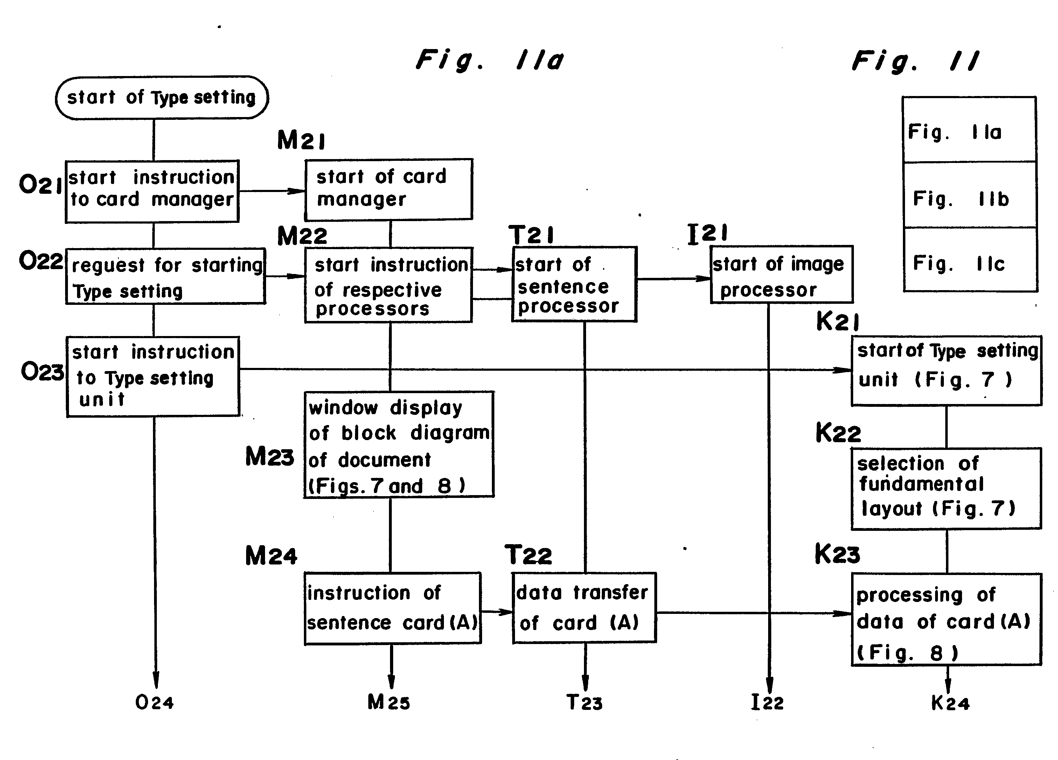

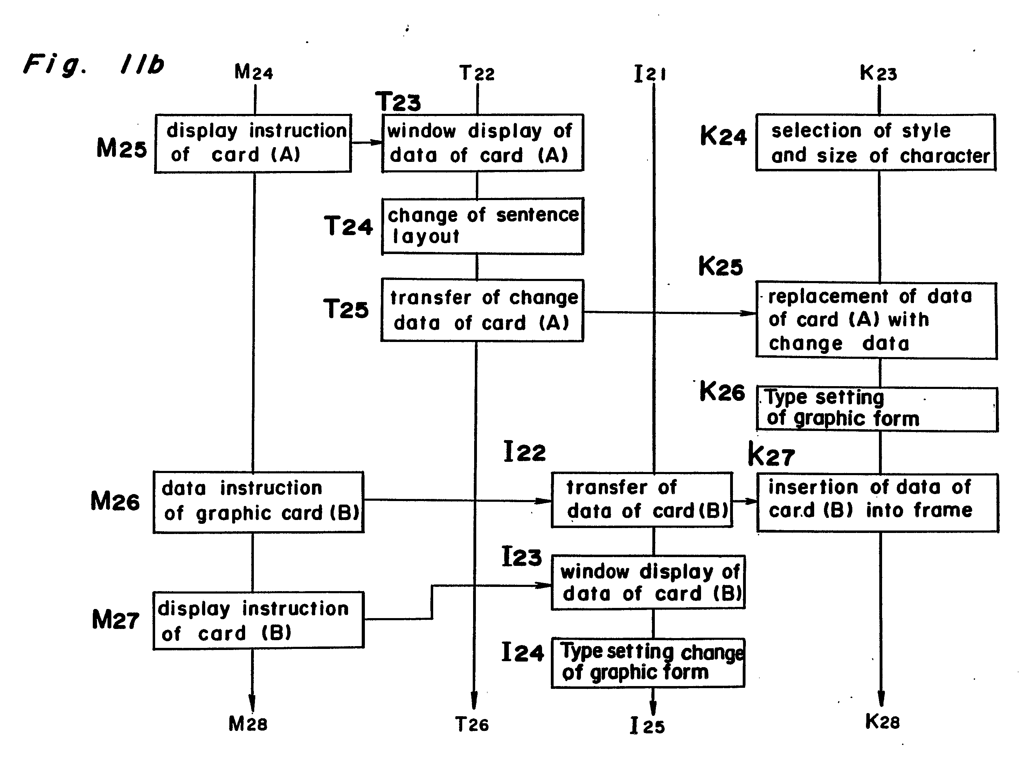

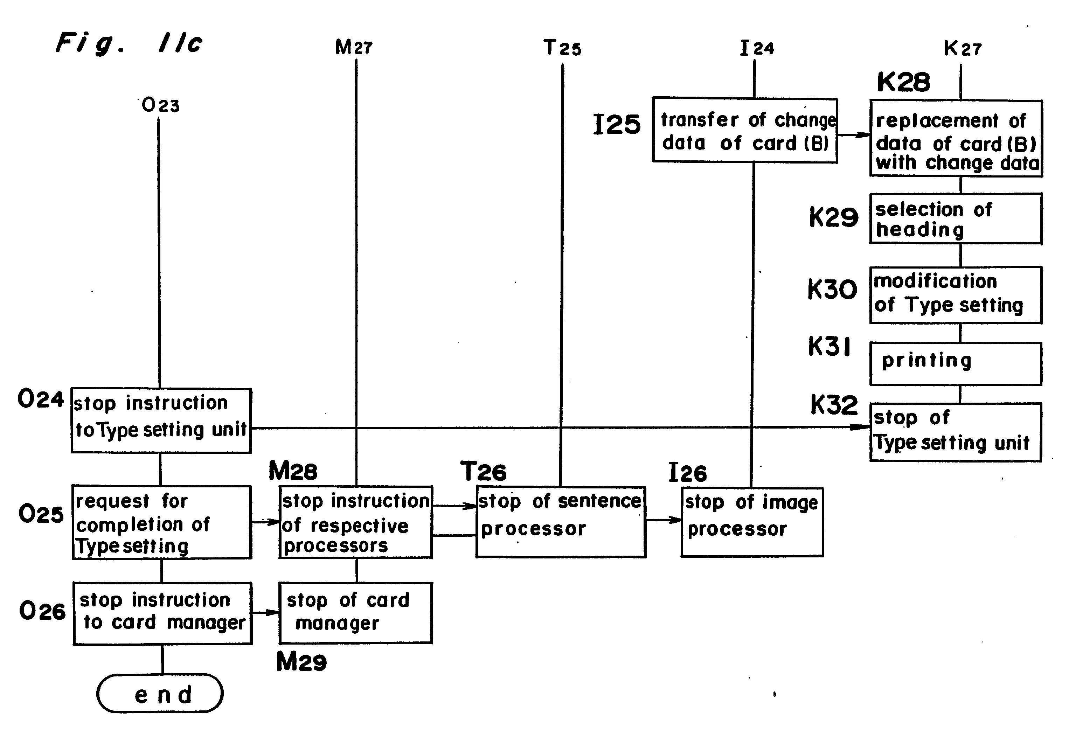

Fig. 11 is an example of flowchart showing the processing of a type setting in which reference numeral (K) denotes the operation step of the type setting unit 5. The processing for a type setting is described hereinbelow with reference to Figs. 11, 2, 3, 7, and 8.

At steps $O_{21}$ and $M_{21}$, similarly to the operation shown in Fig. 10, the operation of the card manager 4 is started.

At step $O_{22}$, the card manager 4 is requested to start a type setting processing. Then, Steps $M_{22}$, $T_{21}$, and $I_{21}$, the operations of the sentence processor 3a and the image processor 3b are started similarly to the operation shown in Fig. 10.

At step $M_{23}$, the block diagram of the document shown in Fig. 3 is window-displayed in the output unit 8.

At step $O_{23}$, the operation of the start of the type setting unit 5 is instructed. Then, at step $K_{21}$, the operation of the type setting unit 5 is started. As a result, "type setting" shown in Fig. 7 is window-displayed.

At step $K_{22}$, according to window-displayed "type setting" shown in Fig. 7, fundamental layouts such as arrangement of the contents of a document, the size of paper and the like are selected. The frames according to the selected type setting is displayed as shown in Fig. 8.

At step $M_{24}$, according to the block diagram of the document shown in Fig. 3 displayed at step $M_{23}$, a card (A) having data to be inputted to the frames is designated. Then, at step $T_{22}$, the data of the card (A) is transferred to the type setting unit 5. Then, at step $K_{23}$, the type setting unit 5 receives the data of the card (A) transferred from the sentence processor 3a and a processing such as word wrap is effected.

At this time, as shown in Fig. 8, the block diagram of the document shown in Fig. 3 and the laid-out frames are displayed simultaneously by the window system. A card (card (A) 'n this case) can be accurately and promptly selected by checking both windows.

At step $K_{24}$, the style and size of the character are selected.

At step $M_{25}$, the display of the card (A) is instructed. Then, at step $T_{23}$, the content of the card (A) is displayed.

At step $T_{24}$, the data of the card (A) is changed by comparing the content of the displayed card (A) with the data of the type setting of the content of the card (A) inputted to the frame so as to modify the type setting.

At step $T_{25}$, the data for changing the type setting of the card (A) inputted to the frame is transferred to the type setting unit 5. Then, at step $K_{25}$, the data of the card (A) which has been inputted to the frame is replaced with the data of the card (A) received by the type setting unit 5.

At step $K_{26}$, the position and size of a frame 15 to which the data of a graphic form is inputted is determined.

At step $M_{26}$, the data of a graphic card (B) is specified according to the window-displayed block diagram of the document shown in Fig. 3. Then, at step $I_{22}$, the data of the card (B) is transferred to the type setting unit 5. At step $K_{27}$, the data of the card (B) transferred from the image processor 3b is received by the type setting unit 5 and inputted to the frame 15 to which the data of the graphic form is inputted.

At step $M_{27}$, the display of the card (B) is instructed. Then, at step $I_{23}$, the content of the card (B) is window-displayed.

At step $I_{24}$, the graphic form is modified by checking the window-displayed type setting thereof.

At step $I_{25}$, the data for modifying the data of the card (B) is transferred to the type setting unit 5. Then, at step $K_{28}$, the data of the card (B) which has been inputted to the frame 15 by the type setting unit 5 is replaced with the data for modifying the data of the card (B) received by the type setting unit 5.

At step $K_{29}$, a heading is selected.

At step $K_{30}$, the document is further modified by checking the entire document which has been laid out on the screen.

At step $K_{31}$, the obtained flat document is printed by a laser beam printer as shown in Fig. 12.

At step $O_{24}$, the type setting unit 5 is instructed to stop its operation. At step $K_{32}$, the operation of the type setting unit 5 is stopped.

At step $O_{25}$, the card manager 4 is requested to complete the type setting processing. Then, at steps $M_{28}$, $T_{26}$ and $I_{26}$, similarly to the operation shown in Fig. 10, the operations of the sentence processor 3a and the image processor 3b are stopped.

At steps $O_{26}$ and $M_{29}$, similarly to the operation shown in Fig. 10, the operation of the card manager 4 is stopped. Thus, the format processing is completed.

The flowchart shown in Fig. 11 shows a simple type setting. The use of the three-dimensional graphic form processor 3d allows one shot of a moving picture to be inserted into the flat document. Practically, the flowchart is more complicated.

According to the present invention, utilizing the feature of the hypertext system, the supporting of the preparation of a document, the control and retrieval of the document, and the control and retrieval of multimedia data are integratedly performed. Further, the hypertext document and data prepared by the type setting unit which allows a type setting to be changed as desired can be converted into a flat document and printed. That is, utilizing the advantage of the hypertext, it is possible to overcome the disadvantage of a conventional hypertext system that a document is prepared in dependence on a single system. Accordingly, the use of the hypertext system in accordance with the present invention is capable of integratedly supporting in preparing a document from the initial stage until the printing of the flat document.

Further, when the hypertext system in accordance with the present invention is utilized as an electronic type setting system, the respective formatted data can be effectively controlled by the multimedia data base function of the hypertext system.

As apparent from the foregoing description, the type setting system according to the present invention comprises the steps of storing a network-shaped flexible text formed by interrelating nodes which are logical units by links; applying type setting operation, necessary in converting the flexible text into a flat text, to the network of the flexible text; and converting the stored flexible text into the flat text based on the type setting operation necessary in converting the flexible text into the flat text. Therefore, the flexible text having a non-linear complicated structure can be appropriately converted into a flat document having a linear structure without degrading the function of the hypertext. The printing of the flat can be utilized at any time and place.

## Claims

1. A type setting system of a flexible text comprising the the steps of:
storing a network-shaped flexible text formed by interrelating nodes which are logical units by links;
applying type setting operation, necessary in converting said flexible text into a flat text, to the network of said flexible text; and
converting said stored flexible text into said flat text via said type setting operation necessary in converting said flexible text into said flat text.

2. The type setting system of a flexible text as defined in Claim 1, wherein the storing is performed by cards which are logical unit of a document, said respective cards being connected to each other by links and being classified into various types according to kind of data such as sentence card, image card, graphic card, voice card and the like, and card processors are provided to display and edit the data of respective cards.

3. The type setting system of a flexible text as defined in Claim 2, wherein each of the cards is linked to the card of feature of system and to the card of structure of system, and has a sentence, photograph, and graphic form.

4. The type setting system of a flexible text as defined in Claim 2, wherein a plurality of cards are opened simultaneously by the window system and characters and graphic form are cut and pasted on each other.

5. The type setting system of a flexible text as defined in Claim 2, wherein the logical relationship formed by the links which connect the cards is converted into the position relationship of a type setting by the type setting operation and the unit of "page" is introduced and is converted into a flat document having a linear structure with the function of the flexible text maintained.

6. The type setting system of a flexible text as defined in Claim 2, wherein the card processors transfer the type setting data, such as word wrap, heading, running head, and page number to a card type-data base manager which issues an instruction to a type setting unit to process the data.

7. The type setting system of a flexible text as defined in Claim 2, wherein the card processors consist of a voice processor for editing a voice.

8. The type setting system of a flexible text as defined in Claim 1, wherein the converting is performed by a type setting unit for processing the data of type setting, which arranges images, graphic forms, and layouts such as the size of paper, the number of columns, the arrangement of the contents of a document, position in which a graphic form is arranged, the style and size of the character.

9. The type setting system of a flexible text as defined in Claim 8, wherein the type setting unit is adapted to change the logical relationship represented by links which connect the cards in accordance with the position relationship of a type setting.

10. The type setting system of a flexible text as defined in Claim 8, wherein according to the fundamental type setting decided by the type setting unit under the control of system manager, the data of document processor is transferred to the type setting unit by the instruction of a card manager.

11. The type setting system of a flexible text as defined in Claim 8, wherein the type setting unit is capable of handling many styles and sizes attributes of characters and processings such as word wrap, heading, running head, and page number, and the cut and paste processing is performed between the type setting unit and the card processors.

12. The type setting system of a flexible text as defined in Claim 8, wherein an editing operation is interactively made by the type setting unit, and the document being prepared is modified or changed in detail checking the entire document displayed on a screen.

# Fig. 1

graph processor **3**

voice processor **3**

other processor **3** **3**

image processor **3**

3-dimensional processor **3**

**1 2 1 2**
**1 2**
**1**

sentence processor **3**

table processor **3**

card manager **4**

Type setting free

Type setting

Type setting unit **5**

laser printer

Type setting document

Fig. 2

EP 0 316 957 A2

Fig. 3

Fig. 4

## *Fig. 5*

| Feature of system |

> This system provides a card type data base >data control which supports an easy document processing and a Type setting system >Typesetting for a preferable data output. Further, photographs and graphic forms can be handled by means of an image scanner connected to the computer, which allows a user to perform an editing as desired.
> < block diagram of system> is an example of the feature of the system.
> >block diagram

## *Fig. 6*

| block diagram |

scanner    LBP

# Fig. 7

Type setting

completion

| arrangement of contents of document | horizontal writing | vertical writing | | |
| --- | --- | --- | --- | --- |

| paper | A4 vertical | A4 horizontal | A5 vertical | A5 horizontal |

number of columns  | 1 | 2 | 3 | 4 | 5 |

number of lines  40

word space  O

line space  8

number of words per lines  15

column space  22

character size  | 6 | 7 | 10 | 14 |

system

data control

graphic

EP 0 316 957 A2

*Fig. 8*

card manager

Type setting

table of contents

feature of system

structure of system

block diagram

scanner

computer

Type setting

data control

display diagram

printer

graphic form

15

# Fig. 9a

```
        ┌───────────────────────────────┐
        │  document preparation start   │
        └───────────────────────────────┘
                        │
                        │              M1
   ┌──────────────────┐           ┌──────────────────┐
O1 │ start instruction│           │ start of card    │
   │ to card manager  │──────────▶│ manager          │
   └──────────────────┘           └──────────────────┘
                        │              M2
   ┌──────────────────┐           ┌──────────────────┐     T1  ┌──────────────────┐
   │ request for      │           │ start instruction│──────▶ │ start of sentence │
O2 │ sentence card    │──────────▶│ to sentence      │        │ processor         │
   │ preparation      │           │ processor        │        └──────────────────┘
   └──────────────────┘           └──────────────────┘     T2  ┌──────────────────┐
                                                                │ input of sentence│
                            ┌──────────────────┐                └──────────────────┘
                        M3  │ retrieval of     │            T3  ┌──────────────────────┐
                            │ quotation        │                │ insertion of quotation│
                            └──────────────────┘                │ data into sentence   │
                            ┌──────────────────┐                └──────────────────────┘
                            │ instruction of   │────┐
                        M4  │ retrieved        │    └─────────▶
                            │ quotation        │            T4  ┌──────────────────┐
                            │ transfer         │                │ editing          │
                            └──────────────────┘                └──────────────────┘
                        M5
   ┌──────────────────┐           ┌──────────────────┐
O3 │ request for      │           │ start instruction│─────────────────────────────▶ I1
   │ graphic card     │──────────▶│ to image         │
   │ preparation      │           │ processor        │
   └──────────────────┘           └──────────────────┘
                 │                          │                            │
                 ▼                          ▼                            ▼
                O4                         M6                           T5
```

# Fig. 9

```
┌──────────────┐
│              │
│   Fig. 9a    │
│              │
├──────────────┤
│              │
│   Fig. 9b    │
│              │
└──────────────┘
```

EP 0 316 957 A2

## Fig. 9b

# Fig. 10a

# Fig. 10

| Fig. 10a |
|---|
| Fig. 10b |

( start of document reading )

O11 — start instruction to card manager

M11 — start of card manager

O12 — request for starting document reading

M12 — start instructions to respective processors

T11 — start of sentence processor

I11 — start of image processor

M13 — display of block diagram of document (Fig. 3)

M14 — display instruction of card of "table of contents"

T12 — display of "table of contents"

O13

M15

T13

I12

EP 0 316 957 A2

# Fig. 10b

**M14**

**M15** | display instruction of card of "feature of system"

**T13** | display of "feature of system"

**O12**

**M16** | display instruction of card of "block diagram"

**I12** | display of block diagram (Fig. 6)

**O13** | request for completion of document reading

**M17** | stop instruction to respective processors

**T14** | stop of sentence processor

**I13** | stop of image processor

**O14** | stop instruction to card manager

**M18** | stop of card manager

**end**

EP 0 316 957 A2

# Fig. IIa

## Fig. II

**start of Type setting**

**M21**

O21 | start instruction to card manager → start of card manager

**M22**      **T21**      **I21**

O22 | request for starting Type setting → start instruction of respective processors → start of sentence processor → start of image processor

**K21**

O23 | start instruction to Type setting unit → start of Type setting unit (Fig. 7)

**M23** | window display of block diagram of document (Figs. 7 and 8)

**K22** | selection of fundamental layout (Fig. 7)

**M24**      **T22**      **K23**

instruction of sentence card (A) → data transfer of card (A) → processing of data of card (A) (Fig. 8)

O24      M25      T23      I22      K24

| Fig. IIa |
| Fig. IIb |
| Fig. IIc |

EP 0 316 957 A2

**Fig. 11b**

M24 → display instruction of card (A) [M25]

T23 → window display of data of card (A) [T22]

K24 → selection of style and size of character [K23]

T24 | change of sentence layout

T25 | transfer of change data of card (A)

K25 | replacement of data of card (A) with change data

K26 | Type setting of graphic form

I22 | transfer of data of card (B)

K27 | insertion of data of card (B) into frame

M26 | data instruction of graphic card (B)

I23 | window display of data of card (B)

M27 | display instruction of card (B)

I24 | Type setting change of graphic form

M28     T26     I25     K28

EP 0 316 957 A2

**Fig. 11c**

I25 | transfer of change data of card (B) → K28 | replacement of data of card (B) with change data

K29 | selection of heading

K30 | modification of Type setting

K31 | printing

O24 | stop instruction to Type setting unit

K32 | stop of Type setting unit

O25 | request for completion of Type setting → M28 | stop instruction of respective processors → T26 | stop of sentence processor → I26 | stop of image processor

O26 | stop instruction to card manager → stop of card manager

M29

( end )

EP 0 316 957 A2

*Fig. 12*